# EUROPÄISCHE PATENTANMELDUNG

(11) **EP 2 508 924 A1**
(43) Veröffentlichungstag der Anmeldung: **10.10.2012**
(21) Anmeldenummer: 11002932.9
(22) Anmeldetag: 07.04.2011
(51) Int. Cl.: G02B 6/30

(54) **Optisches Kopplungssystem für auf einer Leiterplatte ausgebildete Polymerlichtwellenleiter**

(71) Anmelder: Rosenberger-OSI GmbH & Co. OHG, 86167 Augsburg (DE); AT & S AG, 8700 Leoben (AT)
(72) Erfinder: Wurster, Clemens Dr., 86167 Augsburg (DE); Schmidt, Stefan, 83329 Waging (DE); Langer, Gregor Dr., 9061 Wölfnitz (AT); Stahr, Hannes, 8605 St. Lorenzen (AT)
(74) Vertreter: Zeitler - Volpert - Kandlbinder

(57) **Zusammenfassung**

Die Erfindung betrifft ein optisches Kopplungssystem zum Koppeln eines auf einer Leiterplatte aus-gebildeten Polymerlichtwellenleiters (14, 16, 18), welcher einen von einem Polymermantel (14, 16) umgebenen Polymerkern (18) aufweist, mit einem bezüglich der Leiterplatte externen Lichtwellenleiter (28, 30), insbesondere Glasfaserlichtwellenleiter (26), welcher einen von einem Mantel (30) umgebenen Lichtwellenleiterkern (28), insbesondere Glasfaserkern, aufweist. Hierbei sind der Polymerkern (18) und der Lichtwellenleiterkern (28) derart direkt miteinander optisch gekoppelt, dass ein optisches Signal aus dem Polymerlichtwellenleiter (14, 16, 18) direkt in den externen Lichtwellenleiter einkoppelt und umgekehrt ein Signal aus dem externen Lichtwellenleiter direkt in den Polymerlichtwellenleiter einkoppelt.

## Beschreibung

Die vorliegende Erfindung betrifft ein optisches Kopplungssystem zum Koppeln eines auf einer Leiterplatte ausgebildeten Polymerlichtwellenleiters, welcher einen von einem Polymermantel umgebenen Polymerkern aufweist, mit einem bezüglich der Leiterplatte externen Lichtwellenleiter, insbesondere Glasfaserlichtwellenleiter, welcher einen von einem Mantel umgebenen Lichtwellenleiterkern, insbesondere Glasfaserkern, aufweist, gemäß dem Oberbegriff des Anspruchs 1.

Leiterplatten mit integrierten optischen Signalverbindungen stellen die nächste Generation der Signalverbindung auf Boardebene dar. Die sogenannte opto-elektronische Leiterplatte zielt auf die Realisierung hochkomplexer Applikationen ab, die eine weitere Miniaturisierung sowie Erhöhung der Integrationsdichte von Produktfeatures benötigen und damit in weiterer Folge eine höhere Produktwertschöpfung der Leiterplatte ermöglichen werden. Leiterplatten mit optischen Verbindungen werden dort zum Einsatz kommen, wo Applikationen höchste Datenströme zwischen Bauelementen, Modulen oder Funktionseinheiten (z.B. High-end-Computer Anwendungen), Störsicherheit gegen elektromagnetische Felder (z.B. Automobil- und Aeronautikanwendungen) oder ein Platz sparendes Design der Verbindungsstrecken (z.B. mobile Anwendungen) benötigen oder eine Energieeinsparung gegenüber widerstandsbehafteten Cu-Leiterbahnen erreicht werden soll.

Optische Datenübertragung im Langstreckenbereich ist schon seit mehreren Jahrzehnten bekannt. So werden in kontinentalen, in Großstadt- und in "Lokal Area"-Netzwerken seit vielen Jahren bereits Lichtfasern bzw. Lichtwellenleiter (LWL) zum Datentransfer eingesetzt. Der Einsatz von Lichtleitern, um Leiterplatten miteinander zu verbinden, oder sogar um integrierte optische Verbindungen innerhalb einer Leiterplatte zu realisieren, ist somit der nächste Schritt. Als optische Lichtleiter kommen Glas- oder Polymerfasern zum Einsatz, oder auch planare Polymer-Wellenleiter, an denen noch geforscht wird. Die planaren Polymer-Wellenleiter sind den Glasfasern im Bereich der optischen Dämpfung zwar unterlegen, was für kurze Entfernung, beispielsweise im Einsatz auf Leiterplatten, vertretbar ist, haben jedoch im Bereich der Prozessierbarkeit bzw. Herstellbarkeit, der Miniaturisierung, der Designfreiheit und nicht zuletzt der Kosten enorme Vorteile.

Die größte Herausforderung bei der Realisierung von integrierten optischen Verbindungen auf der Leiterplatte mittels optischen Wellenleitern (planare Wellenleitertechnologie) ist die Anbindung der Wellenleiterenden an opto-elektronische Bauteile oder an optische Stecker-Module, die die Verbindung zur "Außenwelt", beispielsweise zu externen Glasfaserkabeln, herstellen. Hierbei ist es üblich, ein optisches Signal aus dem planaren Wellenleiter auf der Leiterplatte zunächst in ein elektrisches Signal umzuwandeln. Dieses elektrische Signal wird in einer herkömmlichen elektrischen Steckverbindung an ein externes Signalkabel übertragen und anschließend wieder in ein optisches Signal umgewandelt, falls die bzgl. der Leiterplatte externe Weiterleitung in einem Lichtwellenleiter gewünscht ist.

Der Erfindung liegt die Aufgabe zugrunde, eine Kopplung von optischen planaren Polymerwellenleitern auf der Leiterplatte mit Glas- oder Polymerfasern zu realisieren.

Diese Aufgabe wird erfindungsgemäß durch ein optisches Kopplungssystem der o.g. Art mit den in Anspruch 1 gekennzeichneten Merkmalen gelöst. Vorteilhafte Ausgestaltungen der Erfindung sind in den weiteren Ansprüchen beschrieben.

Bei einem optischen Kopplungssystem der o.g. Art ist es erfindungsgemäß vorgesehen, dass der Polymerkern und der Lichtwellenleiterkern derart direkt miteinander optisch gekoppelt sind, dass ein optisches Signal aus dem Polymerlichtwellenleiter direkt in den externen Lichtwellenleiter einkoppelt und umgekehrt ein Signal aus dem externen Lichtwellenleiter direkt in den Polymerlichtwellenleiter einkoppelt.

Dies hat den Vorteil, dass eine rein passive Kopplung ohne aktive elektrische Bauteile und ohne eine opto-elektronische Wandlung realisiert ist.

Eine zusätzliche axiale Ausrichtung der zu koppelnden Lichtwellenleiter erzielt man dadurch, dass der externe Lichtwellenleiter in eine Ferrule eingebettet ist, wobei an der Ferrule mindestens eine erste Führungsvorrichtung angeordnet ist, wobei an der Leiterplatte mindestens eine zweiten Führungsvorrichtung angeordnet ist, wobei die erste und zweite Führungsvorrichtung derart ausgebildet sind, dass diese zusammenwirkend eine axial fluchtende Positionierung des Lichtwellenleiterkerns und des Polymerkerns in mindestens eine Richtung im Raum herstellen.

Eine einfache Herstellung der zweiten Führungsvorrichtung ggf. gleichzeitig im demselben Herstellungsprozess, insbesondere einem Lithographieprozess, wie dem Polymerlichtwellenleiter erzielt man dadurch, dass die zweite Führungsvorrichtung aus demselben Werkstoff hergestellt ist, wie der Polymerlichtwellenleiter.

Eine besonders einfache und gleichzeitig präzise Herstellung von Anschlagflächen für die exakte Positionierung der zu koppelnden Lichtwellenleiter erzielt man dadurch, dass mindestens in einem Teil des vorbestimmten axialen Abschnittes der Lichtleiterkerns von dem Mantel derart befreit ist, dass eine ursprünglich dem Mantel zugewandte erste Fläche des Lichtleiterkern frei liegt, und der Polymerlichtwellenleiter von einem Teil des Polymermantels und dem Polymerkern derart befreit ist, dass ein verbliebener Teil des Polymermantels mit einer ursprünglich dem Polymerkern zugewandten zweiten Fläche frei liegt, wobei der Lichtwellenleiterkern mit der ersten Fläche an der zweiten Fläche des Polymermantels anschlägt.

Eine weitere Vereinfachung der exakten Positionierung der zu koppelnden Lichtwellenleiter erzielt man dadurch, dass mindestens in einem Teil des vorbestimmten axialen Abschnittes der Polymerkern von dem Polymermantel derart befreit ist, dass eine ursprünglich Polymermantel zugewandte dritte Fläche des Polymerkerns frei liegt, und der externe Lichtwellenleiter von einem Teil des Mantels und dem Lichtwellenleiterkern derart befreit ist, dass ein verbliebener Teil des Mantels des externen Lichtwellenleiters mit einer ursprünglich dem Lichtwellenleiterkern zugewandten vierten Fläche frei liegt, wobei der Polymerkern mit der dritten Fläche an der vierten Fläche des Mantels des externen Lichtwellenleiters anschlägt.

Die Erfindung wird im Folgenden anhand der Zeichnung näher erläutert. Diese zeigt in:
- Fig. 1: einen Polymerlichtwellenleiter auf einer Leiterplatte in schematischer Schnittansicht,
- Fig. 2: eine beispielhafte Ausführungsform eines erfindungsgemäßen optischen Kopplungssystems in schematischer Schnittansicht in einem ersten Montagezustand,
- Fig. 3: die Ausführungsform des erfindungsgemäßen optischen Kopplungssystems gemäß Fig. 2 in schematischer Schnittansicht in einem zweiten Montagezustand,
- Fig. 4: den Polymerlichtwellenleiter auf einer Leiterplatte gemäß Fig. 1 in Aufsicht und
- Fig. 5: eine beispielhafte Ausführungsform einer in Fig. 2 und 3 lediglich schematisch dargestellten Ferrule mit Glasfaserlichtwellenleiter in schematischer Aufsicht.

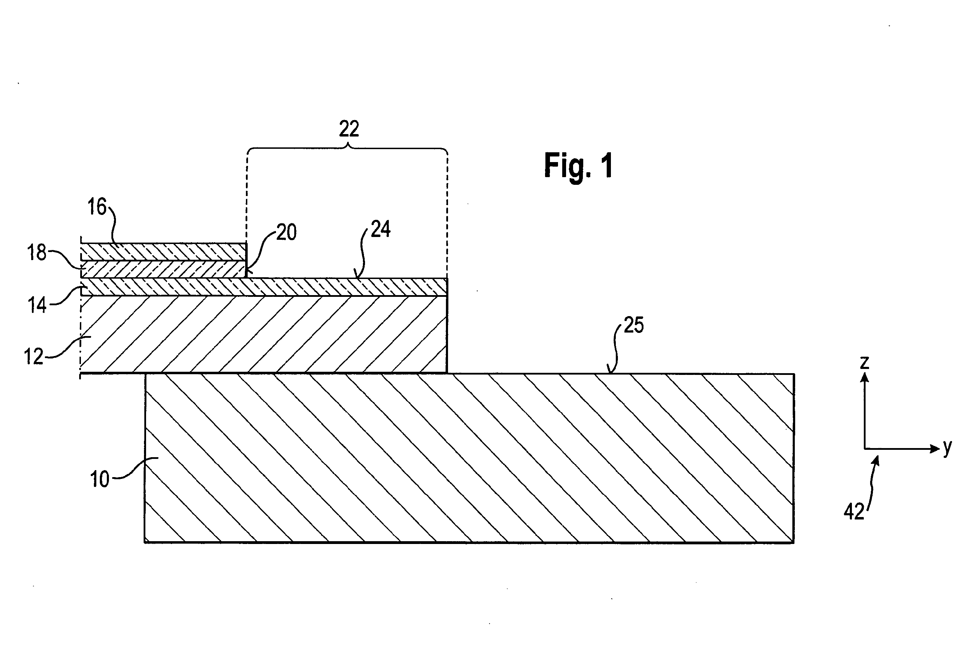

Fig. 1 zeigt einen Polymerlichtwellenleiter, welcher auf einer Leiterplatte mit einem starren Substrat 10 und einer weiteren Schicht 12 ausgebildet ist. Die Schichten 10 und 12 können alternativ auch aus einem Leiterplattenteil gefertigt sein (Fräsung). Der Polymerlichtwellenleiter ist auf der Schicht 12 als planare Struktur aufgebaut und umfasst einen ersten Polymermantel 14 sowie einen zweiten Polymermantel 16 zwischen denen ein Polymerkern 18 angeordnet ist. Der Polymerkern 18 und die Polymermäntel 14, 16 sind aus demselben polymeren Werkstoff hergestellt. Der Werkstoff des Polymerkerns 18 weist einen höheren Brechungsindex als der Werkstoff der Polymermäntel 14, 16 auf, wodurch der Lichtwellenleiter definiert ist.

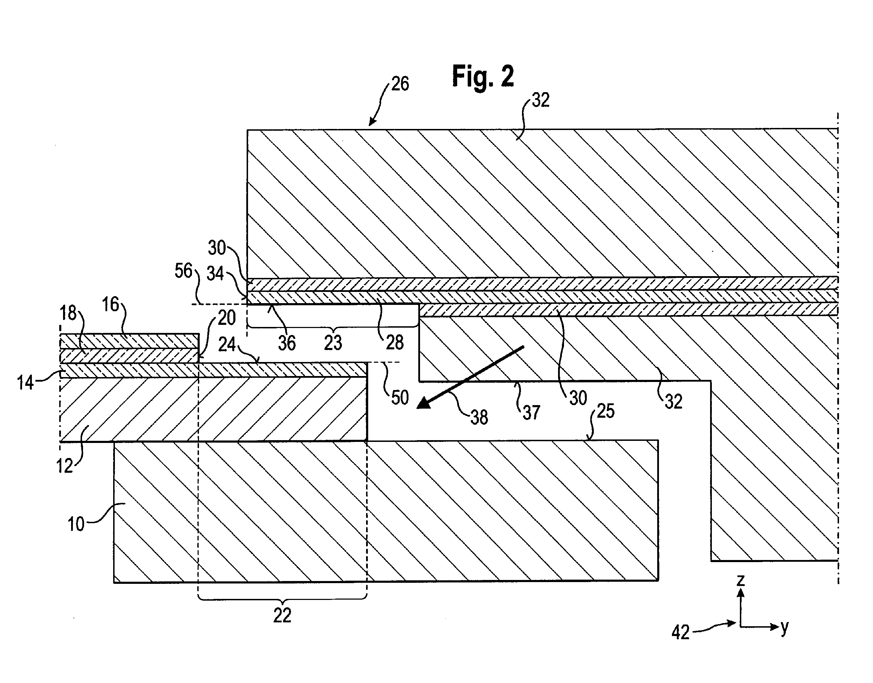

Der Polymerlichtwellenleiter ist benachbart zu einer stirnseitigen Endfläche 20 des Polymerkerns 18 über einen Teil 22 eines vorbestimmten axialen Abschnittes 23 (Fig. 2) von dem zweiten Polymermantel 16 und dem Polymerkern 18 befreit, so dass eine zweite Fläche 24 des ersten Polymermantels 14, welche ursprünglich dem Polymerkern 18 zugewandt war, frei liegt. Alternativ wird der Polymerlichtwellenleiter direkt mit einer "Stufe" hergestellt.

Fig. 2 veranschaulicht einen Glasfaserlichtwellenleiter 26 mit einem Glasfaserkern 28 und einem Mantel 30, welcher in einer Ferrule 32 angeordnet ist. Der Glasfaserlichtwellenleiter 26 ist über einen vorbestimmten axialen Abschnitt 23, welcher in axialer Richtung länger ist als der Teil 22 (Fig. 1) des vorbestimmten axialen Abschnitt 23, benachbart zu einer stirnseitigen Endfläche 34 des Glasfaserkerns 28 von einem Teil des Mantels 30 befreit, so dass eine erste Fläche 36 des Glasfaserkerns 28, welche ursprünglich dem Mantel 30 zugewandt war, frei liegt.

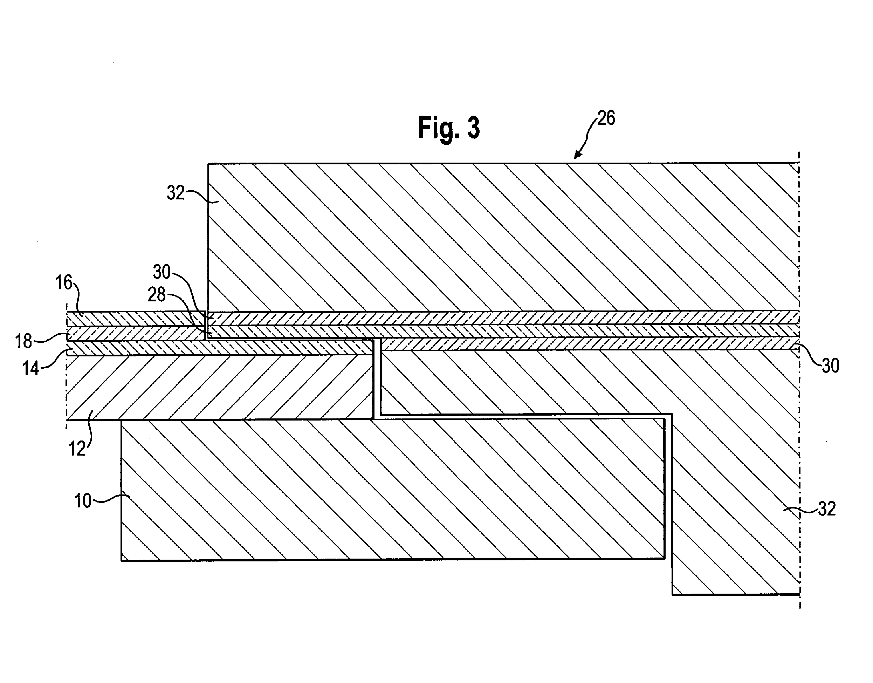

Zum Herstellen eines erfindungsgemäßen Kopplungssystems, welches den Polymerlichtwellenleiter 14, 16, 18 und den Glasfaserlichtwellenleiter 26 lichtleitend bzw. optisch miteinander verbindet, wird die Ferrule 32 mit dem wie oben beschrieben präparierten Glasfaserlichtwellenleiter 26 auf die Leiterplatte 10, 12 mit dem wie oben beschrieben präparierten Polymerlichtwellenleiter 14, 16, 18 aufgeschoben, wie mit Pfeil 38 in Fig. 2 angedeutet, so dass die die erste und zweite Fläche 24, 36 einander zugewandt sind bzw. aneinander anschlagen. Dieser Zustand ist in Fig. 3 veranschaulicht. Zum optischen Verbinden ist optional zusätzlich eine Klebeschicht (nicht dargestellt) zwischen der stirnseitigen Endfläche 20 des Polymerkerns 18 und der stirnseitigen Endfläche 34 des Glasfaserkerns 28 angeordnet. Erfindungsgemäß ist damit der Glasfaserkern 28 direkt mit dem Polymerkern 18 optisch gekoppelt. Zur mechanischen Verbindung ist optional eine Klebeschicht zwischen einer Fläche 25 des starren Substrats 10 und einer Fläche 37 der Ferrule 32 vorgesehen.

Mit anderen Worten ist jeweils der Polymerlichtwellenleiter 14, 16, 18 über den Teil 22 und der Glasfaserlichtwellenleiter 26 über den Abschnitt 23 gestuft ausgebildet, wobei der Abschnitt 23 länger ist als der Teil 22. Hierdurch schlagen die stirnseitigen Endflächen 20, 34 sicher aneinander an.

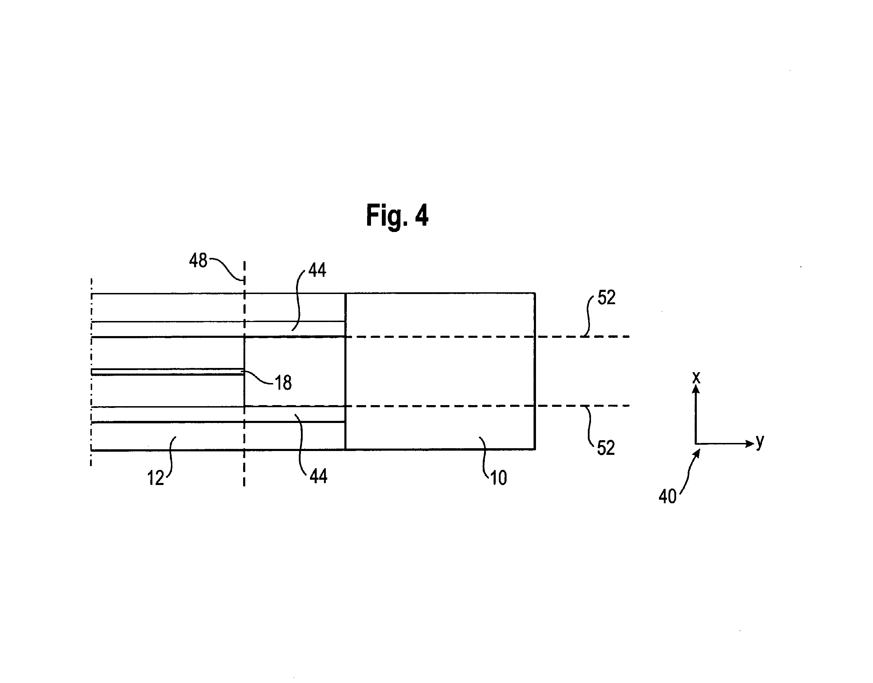

Fig. 4 zeigt die Leiterplatte 10, 12 mit Polymerlichtwellenleiter in Aufsicht. Weiterhin veranschaulicht ein x-y-Achsenkreuz 40 in Fig. 4 zwei Richtungen im Raum, nämlich eine x-Richtung und eine y-Richtung, die senkrecht aufeinander stehen und die Blattebene der Fig. 4 aufspannen. Eine dritte Richtung z ist senkrecht zur Blattebene von Fig. 4 ausgerichtet. Diese ist aus einem z-y-Achsenkreuz 42 in Fig. 1 bzw. 2 ersichtlich. Die zweite Fläche 24 bildet eine exakte Positionierung der beiden zu koppelnden Lichtwellenleiter in z-Richtung. Die aneinander anschlagenden stirnseitigen Endflächen 20, 34 bilden eine exakte Positionierung der beiden zu koppelnden Lichtwellenleiter in y-Richtung.

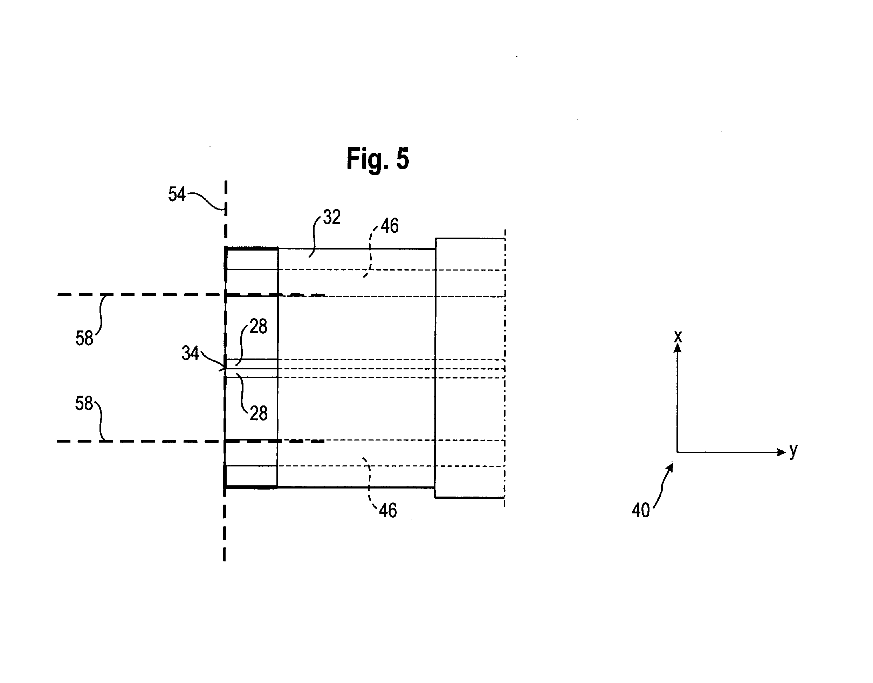

Zur exakten Positionierung der beiden zu koppelnden Lichtwellenleiter in x-Richtung sind Seitenführungsstrukturen 44 auf der Leiterplatte bzw. der Schicht 12 der Leiterplatte ausgebildet, wie aus Fig. 4 ersichtlich. Diese Seitenführungsstrukturen 44 wirken mit Führungsbohrungen 46 zusammen, die in der Ferrule 32 ausgebildet sind, wie aus Fig. 5 ersichtlich.

Die Erfindung betrifft eine steckbare, optische Schnittstelle und geht von der Leiterplatte 10, 12 mit dem planaren Polymerwellenleitersystem 14, 16, 18 aus, wobei dieses am Wellenleiterende, das an eine Lichtfaser gekoppelt werden soll, ein spezielles Stufendesign aufweist. Die mit dem Polymerlichtwellenleitersystem 14, 16, 18 optisch und mechanisch zu verbindende zweite Komponente des optischen Koppelsystems ist in der dargestellten Ausführungsform eine mit mindestens einem Glasfaserwellenleitersystem 30, 34 in herkömmlicher Weise verbundene MT-Ferrule (genormt nach IEC 61754-5) oder ein ähnliches Element, wobei die Ferrule 32 mit dem Glasfaserlichtwellenleitersystem 30, 34 und das Polymerlichtwellenleitersystem 14, 16, 18 derart bearbeitet sind, dass diese ein Stufendesign aufweisen (Fig. 1 und 2). Beide Komponenten (Leiterplatte 10, 12 und beispielhaft die MT-Ferrule 32) lassen sich nun exakt ineinander schieben, sodass eine optimale optische Kopplung zwischen dem Polymerwellenleiter 14, 16, 18 auf der Leiterplatte 10, 12 und dem Glasfaserwellenleiter 26 in der beispielhaft verwendeten MT-Ferrule 32 ergibt. Zur Fixierung werden die beiden Komponenten beispielsweise, d.h. Polymerwellenleiter 14, 16, 18 auf der Leiterplatte 10, 12 und Glasfaserwellenleiter 26 in der Ferrule 32, aneinander geklebt.

Beide Komponenten weisen folgende Eigenschaften auf: Wellenleiterendflächen bzw. stirnseitige Endflächen 20, 34 des Polymerkerns 18 und des Lichtwellenleiterkerns 28 mit sehr hohen optischen Qualitäten, Referenzmarken oder Führungen 44, 46, damit die Komponenten exakt zu den Wellenleitern ausgerichtet sind und Kavitäten in der Leiterplatte (siehe Fläche 25), in denen die Komponenten mechanisch befestigt werden. Dieses Konzept ist sowohl für Mehrmoden- als auch für Einmodenlichtwellenleiter geeignet.

Erfindungsgemäß wird somit ein Interfacekonzept (optisches Kopplungssystem) vorgeschlagen, das eine direkte optische Kopplung zwischen dem planaren Polymerwellenleiter 14, 16, 18 auf der Leiterplatte 10, 12 und einem Glasfaserwellenleiter 26 beispielhaft in einer MT-Ferrule 32 vorgeschlagen.

Die Leiterplatte 10, 12 weist planare optische Wellenleiter 14, 16, 18 auf. Sie umfasst das starre Substrat 10, wie beispielsweise FR4, und eine weitere Schicht 12, die ebenfalls starr oder aber auch flexibel, beispielsweise aus Polyimid, ausgebildet ist. Auf der Schicht 12 sind die optischen Wellenleiter 14, 16, 18 aufgebracht, die einen flächig aufgebrachten Polymermantel (Cladding) 14, einen strukturierten Wellenleiterkern bzw. Polymerkern 18 und einen weiteren, wiederum flächig aufgebrachten Polymermantel (Cladding) 16 aufweisen. Die Polymermäntel bzw. Cladschichten 14 und 16 sind aus demselben Werkstoff hergestellt. Der Werkstoff des Wellenleiterkerns 18 weist einen höheren Brechungsindex als der Werkstoff der Cladschichten 14, 16 auf, wodurch der Polymerlichtwellenleiter definiert ist. Weiterhin sind Seitenführungsstrukturen 16 aufgebracht, die aus demselben Werkstoff und im selben Lithographieprozess wie die Polymerlichtwellenleiter 14, 16, 18 hergestellt sind.

Die Leiterplatte 10, 12 ist derart aufgebaut, dass folgende drei Strukturmerkmale die Position einer zu koppelnden Komponente relativ zu dem Polymerwellenleiterkern 18 genau definieren: Die Position in y-Richtung wird über eine erste Ebene 48 (Fig. 4, 5) definiert, indem das zu koppelnde Teil bis zum Anschlag zur stirnseitigen Endfläche 20 geführt wird. Die Position in z-Richtung wird über eine zweite Ebene 50 (Fig. 2) eingestellt, die von der zweiten Fläche 24 definiert ist. Die Position in x-Richtung wird über eine dritte Ebenen 52 bzw. die Seitenführungsstrukturen 44 eingestellt. Da diese drei Positionsstrukturen 48, 50 und 52 nicht indirekt über Marker bestimmt sind, sondern direkt mit den Wellenleiterstrukturen in Verbindung stehen, wird eine sehr genaue Ausrichtung zwischen den zu koppelnden Lichtwellenleitern realisiert.

Ein Ausführungsbeispiel für einen Glasfaserlichtwellenleiter ist eine Standard-MT-Ferrule 32, wie in Fig. 5 dargestellt. Diese Standard-MT-Ferrule 32 weist die Führungsbohrungen 46 auf. Zusätzlich wird sie an der stirnseitigen Endfläche nach bekannter Art und Weise poliert, sodass auch die in der Ferrule 32 eingesetzten Fasern an den Enden 34 eine optisch hochwertige Stirnfläche aufweisen. Ein zusätzliches Merkmal der Ferrule 32 ist die Stufe, welche beispielsweise durch Schleifen und Polieren hergestellt ist, wobei die Tiefe der Stufe durch die Oberseite 36 des Faserkerns 28 definiert ist, und somit eine vierte Ebene 54 ausbildet. Die vierte Ebene 54 definiert bei einer Kopplung mit dem Polymerlichtwellenleiter 14, 16, 18 auf der Leiterplatte 10, 12 die Position in y-Richtung und ist somit das Gegenstück zur ersten Ebene 48. Eine fünfte Ebene 56 (Fig. 2) definiert die Position in z-Richtung und ist das Gegenstück zur zweiten Ebene 50. Durch die in der MT-Ferrule 32 bereits vorhandenen, sehr präzise ausgeformten Führungsbohrungen 46 werden sechste Ebenen 58 und somit die Position in x-Richtung definiert (Gegenstück zur dritten Ebene 52).

Die beiden Komponenten Ferrule 32 und Leiterplatte 10, 12 können leicht aufeinander geschoben werden und bilden nun das optische Koppelsystem. Der Polymerkern 18 des planaren Polymerlichtwellenleiters 14, 16, 18 auf der Leiterplatte 19, 12 und die Glasfaserkerne 28 der Glasfasern in der MT-Ferrule 32 werden in den Positionen x, y und z exakt aufeinander positioniert. Im Bereich der Anlage der Flächen 25 und 37 können die beiden Komponenten aneinander geklebt werden, um eine mechanische Stabilisierung zu erreichen. Zwischen dem planaren Wellenleiterende (stirnseitige Endfläche 20) und Faserende (stirnseitigen Endfläche 34) kann ebenfalls ein optischer Kleber eingebracht werden, der einen für die Wellenleiterkerne 18, 28 passenden Brechungsindex aufweist und gegebenenfalls einen Luftspalt verhindert.

Durch die Erfindung ist es möglich, dass eine optische Leiterplatte (Leiterplatte 10, 12 mit planarem optischen Polymerlichtwellenleiter 14, 16, 18) mit Glas- oder Polymerfasern eines Glasfaserlichtwellenleiters über eine modifizierte Standard-MT-Ferrule 32 oder einem ähnlich gestaltetem Element passiv optisch gekoppelt wird. Durch dieses optische Interface können optische Leiterplatten, die in Zukunft einen immer wichtigeren Stellenwert in der optischen Datenübertragung einnehmen werden, mit Standardlichtfasern, die bereits seit Jahrzehnten im Einsatz sind, gekoppelt werden.

Diese Erfindung kann für alle optischen Anwendungen zum Einsatz kommen, in denen ein Polymerwellenleiter auf der Leiterplatte über ein Koppelmodul mit z.B. einer Lichtfaser verbunden werden soll. Das Einsatzgebiet reicht von Datenübertragungslösungen im High End Computerbereich über Fiber-to-the-Home Anwendungen bis zu optischen Kopplungssystemen für den Entertainment Bereich.

Insgesamt wird ein passives Kopplungssystem einer Lichtfaser an einen Polymerwellenleiter auf einer Leiterplatte mit Strukturen zum exakten Ausrichten im Raum, d.h. in drei aufeinander senkrecht stehenden Richtung, zur Verfügung gestellt.

## Patentansprüche

1. Optisches Kopplungssystem zum Koppeln eines auf einer Leiterplatte (10, 12) ausgebildeten Polymerlichtwellenleiters (14, 16, 18), welcher einen von einem Polymermantel (14, 16) umgebenen Polymerkern (18) aufweist, mit einem bezüglich der Leiterplatte (10, 12) externen Lichtwellenleiter (28, 30), insbesondere Glasfaserlichtwellenleiter (26), welcher einen von einem Mantel (30) umgebenen Lichtwellenleiterkern (28), insbesondere Glasfaserkern, aufweist,
**dadurch gekennzeichnet,**
**dass** der Polymerkern (18) und der Lichtwellenleiterkern (28) derart direkt miteinander optisch gekoppelt sind, dass ein optisches Signal aus dem Polymerlichtwellenleiter (14, 16, 18) direkt in den externen Lichtwellenleiter einkoppelt und umgekehrt ein Signal aus dem externen Lichtwellenleiter direkt in den Polymerlichtwellenleiter einkoppelt.

2. Optisches Kopplungssystem nach Anspruch 1, **dadurch gekennzeichnet, dass** der externe Lichtwellenleiter (28, 30) in eine Ferrule (32) eingebettet ist, wobei an der Ferrule (32) mindestens eine erste Führungsvorrichtung (46) angeordnet ist, wobei an der Leiterplatte (10, 12) mindestens eine zweiten Führungsvorrichtung (44) angeordnet ist, wobei die erste und zweite Führungsvorrichtung (46, 44) derart ausgebildet sind, dass diese zusammenwirkend eine axial fluchtende Positionierung des Lichtwellenleiterkerns (28) und des Polymerkerns (18) in mindestens eine Richtung im Raum herstellen.

3. Optisches Kopplungssystem nach Anspruch 2, **dadurch gekennzeichnet, dass** die zweite Führungsvorrichtung (44) aus demselben Werkstoff hergestellt ist, wie der Polymerlichtwellenleiter (14, 16, 18).

4. Optisches Kopplungssystem nach mindestens einem der vorhergehenden Ansprüchen, **dadurch gekennzeichnet, dass** in dem vorbestimmten axialen Abschnittes (23) der Lichtleiterkern (28) von dem Mantel (30) derart befreit ist, dass eine ursprünglich dem Mantel (30) zugewandte erste Fläche (36) des Lichtleiterkern (28) frei liegt, und der Polymerlichtwellenleiter (14, 16, 18) von einem Teil des Polymermantels (14, 16) und dem Polymerkern (18) derart befreit ist, dass ein verbliebener Teil (14) des Polymermantels (14, 16) mit einer ursprünglich dem Polymerkern (18) zugewandten zweiten Fläche (24) frei liegt, wobei der Lichtwellenleiterkern (28) mit der ersten Fläche (36) an der zweiten Fläche (24) des Polymermantels (14) anschlägt.

5. Optisches Kopplungssystem nach mindestens einem der vorhergehenden Ansprüchen, **dadurch gekennzeichnet, dass** mindestens in einem Teil (22) des vorbestimmten axialen Abschnittes (23) der Polymerkern (18) von dem Polymermantel (14, 16) derart befreit ist, dass eine ursprünglich dem Polymermantel (14, 16) zugewandte dritte Fläche des Polymerkerns (18) frei liegt, und der externe Lichtwellenleiter (28, 30) von einem Teil des Mantels (30) und dem Lichtwellenleiterkern (28) derart befreit ist, dass ein verbliebener Teil des Mantels (30) des externen Lichtwellenleiters (28, 30) mit einer ursprünglich dem Lichtwellenleiterkern (28) zugewandten vierten Fläche frei liegt, wobei der Polymerkern (18) mit der dritten Fläche an der vierten Fläche des Mantels (30) des externen Lichtwellenleiters (28, 30) anschlägt.
